(19) Europäisches Patentamt
European Patent Office
Office européen des brevets

(11) **EP 3 257 204 B1**

(12) **FASCICULE DE BREVET EUROPEEN**

(45) Date de publication et mention de la délivrance du brevet:
**17.07.2019 Bulletin 2019/29**

(21) Numéro de dépôt: **16707175.2**

(22) Date de dépôt: **01.02.2016**

(51) Int Cl.:
*H04L 12/721* (2013.01)    *H04L 12/709* (2013.01)
*H04L 12/54* (2013.01)

(86) Numéro de dépôt international:
**PCT/FR2016/050208**

(87) Numéro de publication internationale:
**WO 2016/128644 (18.08.2016 Gazette 2016/33)**

(54) **PROCÉDÉ DE SÉLECTION DE CONCENTRATEURS DE CONNEXIONS RÉSEAU**

VERFAHREN ZUR AUSWAHL VON NETZWERKVERBINDUNGSKNOTEN

METHOD FOR SELECTING NETWORK CONNECTION HUBS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.02.2015 FR 1551228**

(43) Date de publication de la demande:
**20.12.2017 Bulletin 2017/51**

(73) Titulaire: **Orange**
**75015 Paris (FR)**

(72) Inventeurs:
• **BOUCADAIR, Mohamed**
**35830 Betton (FR)**
• **JACQUENET, Christian**
**35131 Pont-pean (FR)**

(56) Documents cités:
**WO-A1-2012/142437    WO-A1-2013/170839**

**Description**

La présente invention concerne le domaine des télécommunications, et notamment les réseaux de communications aptes à mettre en oeuvre le protocole IP (Internet Protocol). Plus particulièrement, la présente invention concerne la fourniture de services dans les réseaux IP « à valeur ajoutée », c'est-à-dire les réseaux capables d'effectuer des traitements différenciés selon la nature du trafic de données acheminé dans le réseau.

L'invention s'applique à tout type de dispositif-client tel qu'un terminal fixe ou mobile, ou une passerelle domestique (« *Residential Gateway* » en anglais) ou une passerelle située dans une entreprise, ou encore une passerelle d'opérateur réseau (« *Gateway* » en anglais). Par souci de concision, un dispositif-client de n'importe quel type sera souvent appelé « terminal » ci-après.

Les terminaux, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multi-interfaces » (« *Multi-Interface* », ou MIF en anglais).

Plusieurs adresses IP peuvent alors être attribuées à ces terminaux MIF pour qu'ils puissent se connecter à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique), de manière simultanée ou différée. Ces adresses IP peuvent :

- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique de portée locale (*Unique Local Address*, ou ULA en anglais), ou adresse IPv6 de portée globale (*Global Unicast Address*, ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, ou d'autres facteurs. Un dispositif MIF peut notamment exploiter la pluralité d'interfaces dont il dispose en cours d'établissement d'une connexion simple (c'est-à-dire, une connexion établie le long d'un chemin unique avec un correspondant donné), voire après l'établissement d'une connexion simple. On notera également qu'un dispositif ne sait pas a priori s'il lui est possible d'utiliser *plusieurs* chemins distincts pour établir une communication avec un correspondant donné ; plus précisément, le dispositif n'acquiert cette information (le cas échéant) qu'à l'issue d'une phase au cours de laquelle il tente d'établir une connexion utilisant des chemins multiples avec le correspondant.

Lorsqu'un terminal dispose de plusieurs interfaces capables de le raccorder à différents types de réseaux d'accès (par exemple : fixe, mobile, ou WLAN), il bénéficie alors d'un accès dit « hybride », parce qu'il combine différentes technologies de réseaux d'accès. Les offres de services concernant un terminal disposant d'un accès hybride reposent sur l'introduction dans le réseau de fonctions permettant d'agréger l'ensemble des connexions réseau d'un terminal (par exemple : WLAN et 3G, ou ADSL, WLAN et 4G).

On rappelle à cet égard (cf. Wikipedia) que, dans le domaine des réseaux, on appelle « agrégation de liens » le regroupement de plusieurs interfaces réseau comme s'il s'agissait d'une seule, notamment dans le but d'accroître le débit au-delà des limites d'un seul lien, et éventuellement de faire en sorte que d'autres interfaces prennent le relais si un lien réseau tombe en panne (principe de redondance). L'agrégation de liens s'applique à tout type de trafic acheminé le long de ces liens, y compris du trafic IP.

L'agrégation de liens peut également être utilisée pour répartir le trafic sur plusieurs liens. Dans ce cas, la répartition de trafic entre des liens/interfaces composant un agrégat de liens dépend de divers paramètres ; elle dépend par exemple du type de trafic (tel que TCP ou UDP), ou de la politique d'ingénierie de trafic (telle que la Qualité de Service requise).

On notera que l'agrégation de liens ne fait aucune hypothèse quant à la configuration de la machine distante. Ainsi, une machine source peut activer une procédure d'agrégation de liens sans que la machine distante utilise une telle fonction.

Divers modes d'agrégation peuvent être envisagés, parmi lesquels les trois modes suivants :

- mode de repli (« *backup* » en anglais) : ce mode consiste à utiliser des chemins secondaires en cas d'indisponibilité des chemins primaires, et ce, afin d'améliorer la disponibilité réseau et, partant, la robustesse et la fiabilité des connexions IP établies sur les différents liens ;
- mode associatif (« *bonding* » en anglais) : ce mode consiste à utiliser les ressources associées avec tout ou partie des chemins disponibles, les flux IP associés à une même application pouvant être répartis entre plusieurs chemins ; le choix d'exploiter l'intégralité des chemins, ou seulement une partie d'entre eux, peut par exemple être conditionné par la nature du trafic ou les caractéristiques de disponibilité ou de fiabilité associées à chaque chemin, lesquelles peuvent varier fortement d'un chemin à l'autre ; tous les chemins sélectionnés pour ce mode associatif sont considérés comme étant des chemins primaires ; et

- mode dit de « confort » : ce mode est similaire au mode associatif, si ce n'est que les flux d'une application donnée ne sont pas répartis entre plusieurs chemins, mais sont envoyés sur un seul chemin.

On notera que ces modes ne sont pas mutuellement exclusifs, et ne sont pas spécifiques à un type particulier de trafic. Ainsi, ils peuvent être mis en place indépendamment de la nature du trafic qui sera acheminé le long des chemins agrégés selon l'un ou l'autre des différents modes.

On appelle « concentrateur de connexions réseau » toute fonction réseau permettant d'agréger les connexions exploitant les différents chemins susceptibles d'être utilisés par un dispositif pour établir une communication avec un dispositif distant. L'intervention d'un concentrateur de connexions réseau a en particulier pour effet qu'une connexion qui est vue par un dispositif local comme étant une connexion à chemins multiples, peut être vue par un dispositif distant comme étant une connexion simple.

Un concentrateur de connexions réseau peut, par exemple, être une fonction embarquée dans une passerelle domestique ou d'entreprise, ou cohabiter avec une fonction relais (« *proxy* » en anglais) MPTCP (Multi-Path TCP) ou SCTP (Stream Control Transmission Protocol) ou avec un point de terminaison de tunnel GRE (Generic Routing Encapsulation), ou encore être un point de terminaison de tunnels IP-in-IP ou de tunnels de niveau 2. Le cas échéant, l'agrégat de tous les chemins multiples par un concentrateur réseau peut donner lieu à l'établissement d'un ou plusieurs tunnels virtuels, par exemple pour faciliter les opérations de gestion (par isolation du trafic caractéristique de la communication établie sur les différents chemins ainsi agrégés, et amélioration du processus de détection de pannes) liées à l'établissement de cette communication.

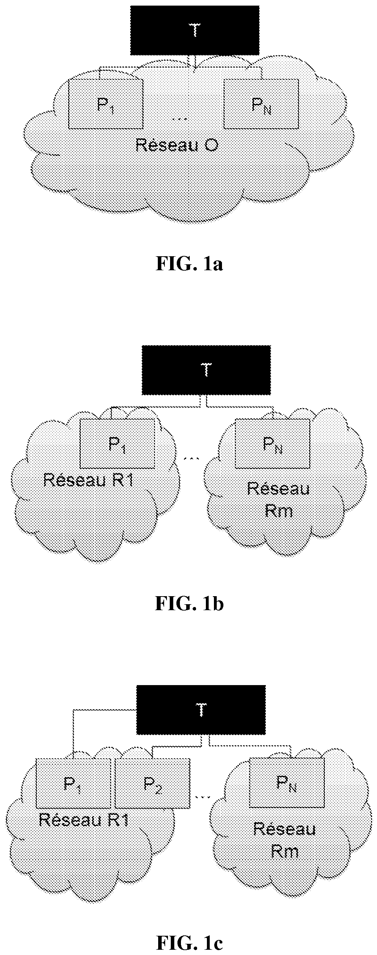

Les **figures 1a, 1b et 1c** illustrent divers types d'architectures associés à des concentrateurs de connexions réseau.

Ces figures montrent un terminal T connecté à un ou plusieurs réseaux IP. La nature des différents réseaux d'accès peut être filaire, sans-fil, ou autre ; par ailleurs, ces accès peuvent être multiples, c'est-à-dire que le terminal T peut avoir la capacité de se connecter à différents réseaux d'accès de manière simultanée ou non.

Le terminal T est connecté aux réseaux IP via $N$ noeuds ($P_1$, $P_2$, ..., $P_N$) embarquant une fonction de concentrateur de connexions réseau. Un tel noeud peut par exemple être une passerelle (domestique, ou d'entreprise) ou un routeur IP. On voit sur les figures que :

- le terminal peut être connecté à un seul réseau O géré par un seul fournisseur de connectivité IP ayant déployé au moins un concentrateur de connexions réseau (figure 1a), ou
- le terminal peut être connecté à m réseaux R1, ..., Rm qui tous hébergent au moins un concentrateur de connexions réseau (figure 1b), ou encore
- le terminal peut être connecté à $m$ réseaux R1, ..., Rm dont une partie héberge plusieurs concentrateurs de connexions réseau (figure 1c).

Cependant, l'exploitation de chemins multiples pour l'établissement de communications soulève des problèmes de diverses natures.

Il est communément admis que l'utilisation de mécanismes de répartition de charge entre plusieurs chemins doit veiller à ce que ces chemins possèdent un niveau de qualité de transfert comparable, afin notamment de ne pas fragiliser l'intégrité des données caractéristiques d'une connexion donnée et échangées le long de ces différents chemins (la qualité de transfert peut être caractérisée par plusieurs paramètres dont, notamment, la latence, la gigue et le taux de perte de paquets). Des exemples de ce type d'implémentations peuvent être trouvés dans les brevets EP2903226 et WO2012 /142437.

Lorsqu'un terminal bénéficie d'un accès hybride, sa capacité effective à exploiter l'ensemble de ses interfaces est généralement associée à la qualité des réseaux d'accès concernés, telle que perçue par le terminal. Cette qualité peut être exprimée en termes de bande passante disponible, de temps d'accès au contenu désiré, ou encore en termes de variation du délai de la transmission de deux paquets consécutifs. Cette qualité est naturellement variable d'un réseau d'accès à l'autre, et peut présenter de fortes disparités de nature à compromettre l'établissement d'une communication à chemins multiples sur les différents réseaux d'accès ; le risque d'une perte d'intégrité des flux échangés au cours de la communication sera d'autant plus important que ces disparités seront grandes, au point que la communication pourrait devenir inintelligible. Quant au lien agrégé, sa qualité dépend en particulier de la localisation du concentrateur de connexions réseau.

Ces niveaux de qualité différents peuvent compromettre l'établissement de sous-sessions supplémentaires dans le contexte d'une connexion à chemins multiples. L'importance du risque de perte d'intégrité évoqué précédemment pourrait inciter le terminal à n'établir qu'une connexion simple, quitte à perdre les bénéfices caractéristiques d'une connexion à chemins multiples, tels que l'optimisation des ressources en bande passante disponibles.

Un tel risque est par ailleurs exacerbé dans le contexte d'un terminal ne comportant pas en propre de moyens lui permettant d'établir une connexion à chemins multiples, et faisant appel pour ce faire à un concentrateur de connexions réseau déployé dans le réseau d'accès auquel le terminal se connecte. Dans ce contexte, la question de la disparité des niveaux de qualité associés à l'utilisation de plusieurs concentrateurs disponibles (par exemple, selon la localisation du terminal distant avec lequel le terminal souhaite établir une communication) est d'autant plus complexe à résoudre que le terminal ne dispose pas nécessairement des informations et de l'intelligence requises pour sélectionner le concentrateur présentant les meilleurs garanties de qualité, par exemple selon la nature du trafic, de l'application, ou du service associés à la communication.

La présente invention concerne donc, selon un premier aspect, un procédé de sélection de concentrateurs de connexions réseau pour un ensemble donné de $M \geq 1$ chemins de communication utilisables par un dispositif communicant, chaque interface respective dudit dispositif communicant étant connectée à un chemin respectif, ledit procédé comprenant les étapes suivantes :

a) identification d'un ensemble $(P_1,P_2,...,P_N)$ de $N \geq 2$ concentrateurs situés dans au moins un réseau auquel le dispositif communicant est connecté, chaque concentrateur permettant d'agréger des connexions exploitant une pluralité de chemins susceptibles d'être utilisés par le dispositif communicant,

b) obtention de la valeur d'au moins un paramètre de Qualité de Service QoS$(i,j)$, pour au moins un chemin $i$, où $i$ = 1, ..., $M$, et pour des concentrateurs $P_j$ joignables à partir du dispositif communicant via ledit chemin $i$, et

c) sélection d'au moins un concentrateur dudit ensemble sur la base desdites valeurs de Qualité de Service obtenues.

On notera que l'invention peut être mise en oeuvre par tout dispositif IP. Ce dispositif peut être de type quelconque, par exemple un terminal, un routeur ou une passerelle résidentielle, et peut être un dispositif MIF ou monointerface. Ce dispositif peut disposer d'une ou plusieurs adresses IP affectées à chacune de ses interfaces physiques ou logiques. Il peut aussi ne disposer que d'une seule interface s'il est situé derrière un dispositif-relais (tel qu'un routeur ou une passerelle résidentielle) connecté à un ou plusieurs réseaux et compatible avec un mécanisme d'agrégation de liens.

On notera également quel le procédé de sélection selon l'invention s'applique à tout type de trafic IP. En particulier, ce procédé peut être avantageusement mis en oeuvre pour préparer l'échange de données transportées conformément aux protocoles TCP, UDP, SCTP, IP-in-IP, TCP-over-UDP, ou TCP-over-TCP. A titre d'exemple, la mise en place de tunnels GRE ou IP-in-IP permet d'agréger tout ou partie du trafic IP (incluant notamment le trafic TCP et UDP) entre un terminal, et un ou plusieurs concentrateurs.

L'invention offre notamment les avantages suivants :

- une sélection déterministe du, ou des concentrateurs de connexion réseau,
- la possibilité de s'adapter aux conditions de raccordement aux réseaux (par exemple, en fonction des débits d'accès disponibles),
- un moyen pour éviter la dégradation de la qualité d'une connexion (dégradation pouvant être causée par un niveau de qualité disparate des chemins multiples invoqués par les flux associés à une même connexion),
- une augmentation de la capacité réseau utilisée par un terminal,
- le bénéfice des avantages des mécanismes d'agrégation de liens, sans pour autant imposer une quelconque intelligence aux serveurs distants, et
- une détection proactive des anomalies réseaux, permettant une prise de décision adéquate pour rediriger le trafic, si besoin, vers un autre concentrateur de connexions réseau.

De plus, l'évaluation selon l'invention de la Qualité de Service peut être utilisée par le dispositif communicant pour identifier les chemins susceptibles d'être agrégés de manière à préserver un niveau de Qualité de Service uniforme lorsque les ressources associées à ces chemins sont invoquées. En particulier, un dispositif communicant peut maintenir plusieurs agrégats, chaque agrégat respectif présentant un niveau de Qualité de Service respectif. Il est clair que la constitution d'agrégats homogènes (c'est-à-dire dont les éléments présentent un niveau de Qualité de Service comparable) dépend du, ou des concentrateurs choisis. Un dispositif communicant peut procéder à la constitution d'agrégats homogènes avant, ou après la sélection selon l'invention du, ou des concentrateurs. Si le dispositif communicant procède en premier lieu à la constitution d'agrégats homogènes, il doit alors de préférence effectuer cette opération pour *l'ensemble* des concentrateurs.

En particulier, des chemins présentant une Qualité de Service médiocre peuvent être sollicités pour l'acheminement de flux applicatifs n'ayant pas de contraintes de Qualité de Service ; toutefois, l'utilisation de tels chemins n'est généralement justifiée que si les applications concernées sont aptes à expliciter leurs besoins en termes de Qualité de Service.

L'exclusion d'un chemin d'un agrégat, ou l'inclusion de ce chemin dans un agrégat, peuvent varier dans le temps en fonction des conditions réseau. Le dispositif communicant peut prendre en compte d'autres critères, tels que la nature du trafic susceptible d'être acheminé le long des chemins d'un agrégat, pour inclure ou exclure un chemin d'un agrégat. On notera que l'exclusion d'un chemin d'un agrégat ne signifie pas que ce chemin est nécessairement désactivé par le terminal.

Par ailleurs, dans le cas d'un dispositif communicant compatible avec des connexions conformes au protocole MPTCP (mentionné ci-dessus) établies sur des chemins multiples, l'invention permet d'améliorer significativement l'ingénierie et le fonctionnement (que l'on décrira ci-dessous) de ces connexions, en améliorant la qualité et la robustesse du processus de gestion de sous-sessions caractéristique du protocole MPTCP. Par exemple, la mise en place de tunnels, mentionnée ci-dessus, peut être avantageusement combinée avec les fonctions MPTCP pour des besoins d'ingénierie, comme de décharger des relais MPTCP si le serveur distant est compatible avec le protocole MPTCP ; un opérateur réseau pourra ainsi optimiser les ressources réseau dédiées à une fonction relais.

Selon des caractéristiques particulières, lors de ladite étape c), on sélectionne le concentrateur $P_{k(i)}$ pour lequel la valeur de Qualité de Service QoS($i,k(i)$) est optimale par comparaison avec les valeurs de Qualité de Service QoS($i,j$), où $j \neq k(i)$, des autres concentrateurs qui ont été joints à partir du dispositif communicant via le chemin i.

Grâce à ces dispositions, la Qualité de Service obtenue est optimale pour chaque chemin dudit ensemble de M chemins de communication.

Selon d'autres caractéristiques particulières, lors de ladite étape c), on sélectionne un concentrateur $P_k$ unique pour l'ensemble desdits M chemins, ce concentrateur $P_k$ étant celui pour lequel la valeur de Qualité de Service QoS($i,k$) est optimale, par comparaison avec les valeurs de Qualité de Service QoS($i,j$), où $j \neq k$, des autres concentrateurs qui ont été joints à partir du dispositif communicant, pour le plus grand nombre de chemins parmi les M chemins.

Grâce à ces dispositions, on préserve de manière simple l'adresse source des messages émis par le dispositif communicant via n'importe lequel des M chemins.

On notera que les deux modes de réalisation que l'on vient de décrire succinctement deviennent trivialement identiques dans le cas où le terminal ne dispose que d'un, et un seul chemin de communication. Par ailleurs, ces modes donnent évidemment le même résultat dans le cas où, quel que soit le chemin, c'est toujours le même concentrateur qui offre la valeur optimale de Qualité de Service.

Selon un deuxième aspect, l'invention concerne divers dispositifs.

Elle concerne ainsi, premièrement, un dispositif communicant ayant des moyens pour :

- identifier un ensemble ($P_1,P_2,...,P_N$) de $N \geq 2$ concentrateurs de connexions réseau situés dans au moins un réseau auquel ledit dispositif communicant est connecté, chaque concentrateur permettant d'agréger des connexions exploitant une pluralité de chemins susceptibles d'être utilisés par le dispositif communicant,
- obtenir la valeur d'au moins un paramètre de Qualité de Service QoS(i,j), pour au moins un chemin *i,* où *i* = 1, ..., M, parmi un ensemble donné de $M \geq 1$ chemins de communication utilisables par ledit dispositif communicant, et pour des concentrateurs $P_j$ joignables à partir du dispositif communicant via ledit chemin i, chaque interface respective du dispositif communicant étant connectée à un chemin respectif, et
- sélectionner au moins un concentrateur dudit ensemble sur la base desdites valeurs de Qualité de Service obtenues.

Ledit dispositif communicant peut comprendre un dispositif-client, tel qu'un terminal d'utilisateur, ou comprendre un dispositif-relais, tel qu'un routeur ou une passerelle résidentielle, apte à mettre en oeuvre une connexion à chemins multiples et connecté à un dispositif-client apte ou non à mettre en oeuvre une connexion à chemins multiples.

L'invention concerne aussi, deuxièmement, un serveur de sélection de concentrateurs de connexions réseau, ayant des moyens pour assister, pour au moins ledit chemin i, la redirection du trafic émis par, ou envoyé à, un dispositif communicant tel que décrit succinctement ci-dessus, vers ledit concentrateur sélectionné.

Les avantages offerts par ces dispositifs sont essentiellement les mêmes que ceux offerts par le procédé de sélection succinctement exposé ci-dessus.

On notera qu'il est possible de réaliser ces divers dispositifs dans le contexte d'instructions logicielles et/ou dans le contexte de circuits électroniques.

Selon un troisième aspect, l'invention concerne un système de sélection de concentrateurs de connexions réseau, comprenant :

- un dispositif communicant, ayant des moyens pour

  • identifier un ensemble ($P_1,P_2,...,P_N$) de $N \geq 2$ concentrateurs de connexions réseau situés dans au moins un réseau auquel ledit dispositif communicant est connecté, chaque concentrateur permettant d'agréger des connexions exploitant une pluralité de chemins susceptibles d'être utilisés par le dispositif communicant, et
  • obtenir la valeur d'au moins un paramètre de Qualité de Service QoS(i,j), pour au moins un chemin *i,* où *i* =

1, ..., $M$, parmi un ensemble donné de $M \geq 1$ chemins de communication utilisables par ledit dispositif communicant, et pour des concentrateurs $P_j$ joignables à partir du dispositif communicant via ledit chemin i, chaque interface respective du dispositif communicant étant connectée à un chemin respectif, et

- un serveur de sélection de concentrateurs de connexions réseau, ayant des moyens pour

  • sélectionner au moins un concentrateur dudit ensemble sur la base desdites valeurs de Qualité de Service obtenues, et
  • assister, pour au moins le chemin i, la redirection du trafic émis par le, ou envoyé au, dispositif communicant, vers ledit concentrateur sélectionné.

L'invention vise également un programme d'ordinateur téléchargeable depuis un réseau de communications et/ou stocké sur un support lisible par ordinateur et/ou exécutable par un microprocesseur. Ce programme d'ordinateur est remarquable en ce qu'il comprend des instructions pour l'exécution des étapes du procédé de sélection succinctement exposé ci-dessus, lorsqu'il est exécuté sur un ordinateur.

Les avantages offerts par ce système, et par ce programme d'ordinateur, sont essentiellement les mêmes que ceux offerts par le procédé de sélection succinctement exposé ci-dessus.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :

- les figures 1a, 1b et 1c, décrites ci-dessus, illustrent divers types d'architectures associées à des concentrateurs de connexions réseau,
- la figure 2 représente un agrégat de sous-sessions TCP formant une unique connexion MPTCP,
- la figure 3 représente un terminal TCP ou MPTCP placé derrière un dispositif-relais compatible avec MPTCP,
- la figure 4 illustre un mode de réalisation de l'invention dans lequel un robot effectue des tests de Qualité de Service et notifie les résultats de ces tests à un serveur dédié,
- les figures 5a et 5b illustrent un mode de réalisation de l'invention dans lequel un terminal notifie les résultats de tests de Qualité de Service à un serveur dédié,
- la figure 6 illustre une option TCP indiquant l'adresse d'un serveur distant, et
- la figure 7 illustre un exemple de mécanisme de communication entre un terminal et un serveur distant, dans lequel on utilise l'option TCP illustrée par la figure 6.

L'invention concerne un ensemble donné de $M \geq 1$ chemins de communication utilisables par un dispositif communicant, chaque interface respective du dispositif communicant étant raccordée à un chemin respectif. Cet ensemble peut comprendre *tous* les chemins connus du dispositif communicant, ou bien seulement une partie d'entre eux.

L'invention s'applique de manière générale à tout protocole régissant les connexions IP à chemins multiples. On va décrire ci-dessous l'application de l'invention au protocole MPTCP, après quelques rappels sur certaines propriétés de ce protocole.

On rappelle tout d'abord que le protocole TCP (initiales des mots anglais « *Transmission Control Protocol* » signifiant « Protocole de Contrôle de Transmission »), défini notamment dans la spécification RFC 793 de l'IETF (Internet Engineering Task Force), est l'un des protocoles principaux utilisés par les terminaux connectés à un réseau IP (par exemple, Internet), de sorte que la littérature évoque souvent la suite de protocoles « TCP/IP ». Le protocole TCP permet d'acheminer de manière fiable, ordonnée et sans erreurs un flux de données numériques entre des applications exécutées sur des terminaux connectés à un réseau local (par exemple, Intranet) ou à l'Internet. Le protocole TCP fonctionne au niveau de la couche transport du modèle OSI. Les navigateurs Web utilisent le protocole TCP lorsqu'ils se connectent à des serveurs distants ; le protocole TCP est aussi utilisé pour acheminer du courrier électronique ou pour transférer des fichiers d'un endroit à un autre. Des protocoles comme HTTP, HTTPS, SMTP, POP3, IMAP, SSH, FTP, Telnet, ainsi que de nombreux autres protocoles sont transportés sur des connexions TCP. Une connexion TCP est identifiée par l'adresse et le numéro de port du terminal source, ainsi que par l'adresse et le numéro de port du terminal de destination.

Deux terminaux peuvent insérer ce que l'on appelle des « options TCP » dans les messages TCP échangés entre eux, afin, par exemple, d'optimiser la qualité de la connexion TCP. De telles options occupent l'espace disponible en fin d'en-tête TCP, et ont une longueur (« *length* » en anglais) exprimée en octets. Le type (« *kind* » en anglais) d'option est un identifiant unique descriptif de la nature de l'option TCP. Par exemple, la valeur « 0 » indique la fin de la liste des options, et la valeur « 2 » indique la taille maximum du segment TCP (« *Maximum Segment Size* », ou MSS en anglais).

L'avènement des terminaux MIF introduit la possibilité d'exploiter les ressources de plusieurs chemins via les réseaux disponibles pour établir une connexion TCP, en utilisant tout ou partie des adresses IP allouées aux différentes interfaces des terminaux MIF. Toutefois, cette possibilité introduit une complexité caractéristique du mode de fonctionnement du protocole TCP : étant donné que les connexions TCP sont associées à une adresse IP et un numéro de port, toute modification d'au moins l'une de ces informations est de nature à pénaliser le fonctionnement de la connexion TCP en cours, et, partant, le service utilisant ladite connexion TCP. Ce changement est particulièrement préjudiciable lorsque le terminal se voit attribuer une nouvelle adresse IP, ou lorsque le terminal se connecte à un autre réseau, ou encore lorsque l'interface à laquelle l'adresse IP est associée n'est plus disponible. Par exemple, des moyens pour informer un correspondant TCP distant qu'une adresse IP n'est plus valide sont alors nécessaires pour assurer le maintien d'une connexion existante sans interrompre les services offerts par cette connexion TCP.

Le groupe de travail « mptcp » de l'IETF a été missionné en 2009 pour spécifier des extensions du protocole TCP capables de s'accommoder des contraintes imposées par la possibilité d'affecter plusieurs adresses IP aux différentes interfaces logiques ou physiques d'un terminal. Ce groupe de travail a publié les premières spécifications du protocole MPTCP (cf. A. Ford, C. Raiciu et M. Handley, « TCP Extensions for Multipath Operation with Multiple Addresses », RFC 6824, janvier 2013) - que certains téléphones « intelligents » et certains systèmes d'exploitation sont d'ailleurs déjà capables de mettre en oeuvre. Le protocole MPTCP répond en particulier au besoin d'assurer une continuité de session IP en cas de mobilité du terminal. L'IETF envisage de faire progresser le statut des spécifications MPTCP actuelles, pour en faire de véritables normes au sens de l'IETF.

Le protocole MPTCP a donc été proposé pour minimiser les risques de rupture intempestive d'une connexion TCP, liés par exemple à de telles modifications d'adressage, et plus généralement pour répondre aux exigences posées par un contexte où un terminal a la capacité de se raccorder à un ou plusieurs réseaux via une ou plusieurs interfaces. En outre, il est prévu dans le document RFC 6824 qu'en cas d'échec d'une tentative d'établissement d'une connexion MPTCP, la connexion bascule automatiquement sur une connexion TCP simple.

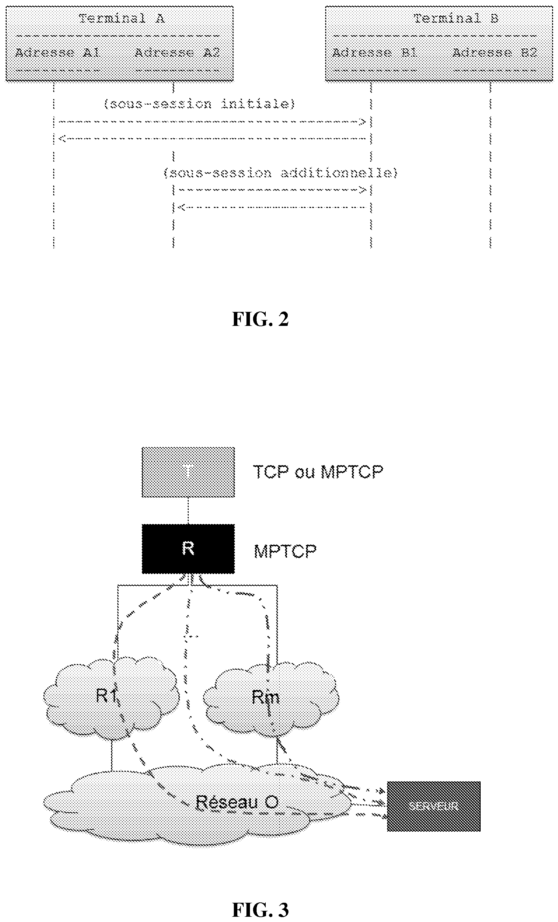

Dans le cadre du protocole MPTCP, on appelle « sous-session » (« sub-flow » en anglais) une connexion TCP reposant sur l'utilisation de l'un des couples (adresse IP, numéro de port) disponibles. De ce fait, une connexion MPTCP est un agrégat de sous-sessions TCP. A titre d'exemple, la **figure 2** montre une connexion MPTCP entre un terminal A et un terminal B ; la sous-session initiale est établie entre l'adresse A1 du terminal A et l'adresse B1 du terminal B ; ultérieurement, une sous-session additionnelle est établie entre l'adresse A2 du terminal A et l'adresse B1 du terminal B. Un terminal MIF peut ainsi se connecter à de nouveaux réseaux, ou se détacher de certains des réseaux, tout en maintenant une même connexion à chemins multiples.

Un exemple particulièrement avantageux d'application du protocole MPTCP est le transfert de fichiers volumineux utilisant les ressources du protocole FTP (File Transfer Protocol). Un dispositif agissant en tant que client FTP peut dynamiquement exploiter l'ensemble des chemins disponibles qui lui permettent d'accéder à un serveur FTP, pourvu que ce dernier soit apte à mettre en oeuvre les différentes connexions MPTCP établies par le client FTP. Le temps de transfert des données est ainsi significativement réduit par rapport à une connexion TCP.

Différents cas d'usage peuvent être envisagés pour le protocole MPTCP, tels que :

- échanger des données entre plusieurs réseaux d'accès sans-fil,
- réduire la charge d'un réseau mobile, en basculant une partie du trafic vers un réseau d'accès sans-fil,
- optimiser l'utilisation des ressources réseau en exploitant de manière simultanée les ressources de plusieurs liens d'accès et en répartissant la charge de trafic d'une ou plusieurs connexions MPTCP sur ces différents liens, ce qui permet d'augmenter significativement la bande passante associée à l'établissement d'une connexion MPTCP, et
- fiabiliser une connexion MPTCP en basculant le trafic acheminé le long d'un chemin primaire vers un chemin de secours en cas de rupture du chemin primaire, et ce, de manière transparente pour l'utilisateur (c'est-à-dire sans interruption de service).

Les systèmes d'exploitation présentent aux applications des interfaces de programmation dédiées, appelées API (*Application Programming Interface*) pour interagir avec les couches TCP et IP. L'API classique présentée aux applications TCP/IP est l'interface « *socket* ». L'interface « *socket* » est caractérisée par plusieurs attributs, tels que « *Local Socket Address* », « *Remote Socket Address* » et « *Protocol* ». Des extensions de l'API TCP/IP, appelées API MPTCP, ont été spécifiées par l'IETF dans le document RFC 6897 pour permettre aux applications de contrôler les connexions MPTCP.

Une connexion MPTCP est initialisée comme n'importe quelle connexion TCP classique, à l'exception du fait qu'une option TCP appelée MP_CAPABLE (signifiant que le terminal émetteur est compatible avec les extensions MPTCP) est incluse dans le message contenant le drapeau d'initialisation de connexion (SYN) et dans les messages ultérieurs. Un terminal MPTCP peut signaler au terminal distant la disponibilité d'une adresse IP supplémentaire à l'aide d'une option TCP appelée ADD_ADDR, sans nécessairement créer de sous-session associée.

La signalisation de plusieurs adresses IP disponibles et susceptibles d'être utilisées pour communiquer avec un correspondant peut conduire à l'échec de l'établissement de certaines sous-sessions TCP, parce que les adresses IP externes telles que perçues par les terminaux distants peuvent ne pas être les mêmes que celles visibles localement.

Pour cette raison, l'option ADD_ADDR du protocole MPTCP comprend un identificateur d'adresse, appelé « Address ID », utilisé pour identifier sans ambiguïté une adresse IP disponible. Cette disposition est censée éviter les problèmes induits par la présence d'un NAT sur le chemin suivi par les paquets entre les deux terminaux qui ont établi une connexion MPTCP. L'option ADD_ADDR est également utilisée pour transmettre un numéro de port dans le cas où l'un des terminaux MPTCP n'utilise pas le même numéro de port pour l'ensemble des adresses IP disponibles.

De même, le protocole MPTCP prévoit des dispositions qui sont censées permettre, notamment, la traversée de pare-feux (« *firewall* » en anglais). Plus précisément, la spécification du protocole MPTCP stipule que les numéros de séquence tels qu'indiqués dans l'en-tête TCP sont spécifiques à chaque sous-session, tandis que le numéro de séquence indiqué dans l'option DSS (« *Data Sequence Signal* ») du protocole MPTCP sert à associer ces sous-sessions à la même connexion MPTCP.

Le protocole MPTCP entend ainsi s'affranchir des contraintes imposées par la prolifération massive de « *middle boxes* » (fonctions intermédiaires dans une chaîne de communication), comme les NAT et les pare-feux, dans les réseaux actuels.

Le protocole MPTCP utilise notamment les options TCP suivantes :

- MP_CAPABLE : cette option, mentionnée ci-dessus, est utilisée pour signaler au terminal distant que le terminal émetteur est compatible avec les options MPTCP ;
- ADD_ADDR : cette option, mentionnée ci-dessus, est utilisée pour ajouter une nouvelle adresse ; elle comprend un champ optionnel de deux octets permettant de fournir également un numéro de port, le cas échéant ;
- REMOVE_ADDR : cette option est utilisée pour supprimer une adresse ;
- MP_PRIO : cette option est utilisée pour modifier la priorité d'une connexion ;
- MP_JOIN : cette option est utilisée pour identifier la connexion TCP qui est associée à l'établissement d'une nouvelle sous-session ;
- MP_FAIL : cette option est utilisée pour revenir au mode TCP sans options MPTCP ; et
- MP_FASTCLOSE : cette option est utilisée pour clôturer rapidement une connexion MPTCP.

Le protocole MPTCP peut être activé selon plusieurs modes :

- *mode natif* : deux terminaux MPTCP établissent toutes les sous-sessions qui correspondent aux numéros des adresses/ports disponibles, et utilisent l'ensemble de ces sous-sessions ;
- *mode primaire* : deux terminaux MPTCP signalent des sous-sessions, mais seul un sous-ensemble de ces sous-sessions est effectivement utilisé pour le transfert de données ;
- *mode secondaire* : en cas d'indisponibilité (ou de surcharge) du sous-ensemble « primaire » de sous-sessions, un sous-ensemble « secondaire » de sous-sessions est alors sollicité pour assurer la continuité de la connexion MPTCP ; et
- *mode repli* : deux terminaux MPTCP utilisent une sous-session unique ; en cas de panne, le trafic est basculé vers une nouvelle sous-session créée à cet effet.

Comme indiqué ci-dessus, le procédé de sélection selon l'invention peut être mis en oeuvre par divers types de dispositifs communicants. Ce dispositif communicant peut être par exemple un dispositif-client, tel qu'un terminal IP, ou une passerelle (telle qu'une passerelle domestique ou d'entreprise) directement connectée au réseau. On notera qu'un terminal MIF localisé derrière une passerelle peut mettre en oeuvre le procédé sans aucune coordination avec cette passerelle.

Le procédé selon l'invention peut également être mis en oeuvre par un équipement, dit dispositif-relais, localisé dans le réseau et agissant au nom d'un dispositif-client tel qu'un terminal ou une passerelle (on dit qu'un tel dispositif-relais « simule » ou « émule » son client). C'est alors sur la base des résultats du procédé selon l'invention qu'un dispositif-client raccordé au dispositif-relais est configuré. Cette configuration permet au dispositif-client de bénéficier de l'optimisation (caractéristique des connexions à chemins multiples) de l'usage des ressources réseau disponibles, et également d'établir des connexions à chemins multiples dans un délai réduit. A titre d'exemple, la **figure 3** représente un terminal TCP ou MPTCP T placé derrière un dispositif-relais R compatible avec MPTCP.

On notera que le dispositif communicant selon l'invention peut être configuré pour s'abstenir d'exploiter des ressources d'agrégation de liens réseau (et donc, de mettre en oeuvre une quelconque sélection de concentrateur) pour certains réseaux, ou dans certaines conditions de fonctionnement (par exemple, en cas de surcharge des concentrateurs de connexions réseau).

On va décrire à présent un mode de réalisation du procédé de sélection selon l'invention.

Lors d'une première étape, un terminal T compatible avec les communications à chemins multiples identifie un ensemble $(P_1, P_2, ..., P_N)$ de $N \geq 1$ concentrateurs (par exemple, une liste de relais MPTCP) situés dans au moins un réseau auquel le terminal T est connecté. Cette détermination peut faire suite à une configuration statique du terminal T, ou bien à une procédure d'identification dynamique ou de découverte dynamique.

On rappelle à cet égard que la découverte des divers chemins connectant un dispositif donné à un correspondant donné peut être réalisée, par exemple, à l'aide d'un protocole d'allocation dynamique d'adresses IP comme DHCP (Dynamic Host Configuration Protocol), ou par un mécanisme de création de *mapping,* tel que PCP (Port Control Protocol), UPnP (Universal Plug and Play), IGD (Internet Gateway Device), ou STUN (Session Traversai Utilities for NAT) (on appelle « *mapping* » l'association d'une adresse IP interne et d'un numéro de port interne avec une adresse IP externe et un numéro de port externe).

L'information caractéristique de l'identification des différents concentrateurs de connexion peut se présenter au terminal T sous forme d'une liste de noms de domaines ({name1, name2, ..., nameN}), ou d'une liste d'adresses IP ({IP@1, IP@2, ..., IP@N}). D'autres moyens pour identifier les concentrateurs de connexions peuvent être envisagés.

Si au moins un nom de domaine (ou identifiant) est configuré dans le terminal T, des mécanismes de résolution de cet identifiant en une ou plusieurs adresses IP sont invoqués. Par exemple, le service DNS (Domain Name Service) peut être sollicité pour récupérer l'adresse ou les adresses IP correspondante(s). Ces mécanismes de résolution sont mis en oeuvre pour chacun des éléments de la liste d'identifiants.

Le terminal T récupère ainsi N adresses IP {IP@1, IP@2, ..., IP@N}, où $N \geq 1$. Ces adresses peuvent être des adresses IPv4 ou IPv6. Ainsi, la liste peut être constituée d'adresses IPv4 exclusivement, ou d'adresses IPv6 exclusivement, ou encore d'adresses tantôt IPv4 et tantôt IPv6.

Si le terminal T a récupéré une seule adresse (IP@1) à l'issue de l'étape S1, il sélectionne évidemment le concentrateur correspondant pour l'ensemble des connexions à chemins multiples.

Si en revanche, à l'issue de la présente étape, le terminal T a récupéré $N \geq 2$ adresses {IP@1, IP@2, ..., IP@N}, le terminal T entreprend de sélectionner un, ou plusieurs, parmi ces *N* concentrateurs pour les *M* chemins de communication, conformément à la présente invention.

Tout d'abord, lors d'une deuxième étape du présent mode de réalisation, le terminal T obtient la valeur d'au moins un paramètre de Qualité de Service QoS($i,j$), pour au moins un chemin *i*, où $i = 1, ..., M$, et pour des concentrateurs $P_j$ joignables à partir du terminal T via ce chemin *i* (de préférence, pour *tous* ces concentrateurs).

Dans le présent mode de réalisation, on utilisera, à titre d'exemple, le délai RTT (initiales des morts anglais « *Round Trip Time* » signifiant « temps d'aller-retour ») en tant que paramètre de Qualité de Service. D'autres paramètres, par exemple le délai du chemin « descendant » ou du chemin « montant », ou encore la bande passante disponible, peuvent bien entendu être utilisés pour caractériser la qualité d'un chemin entre le terminal T et un concentrateur de connexions réseau.

En outre, on peut utiliser une combinaison de plusieurs paramètres de Qualité de Service pour la sélection des concentrateurs. Dans ce cas, le procédé de sélection selon l'invention peut être enrichi par des instructions relatives à la priorisation des paramètres de Qualité de Service (autrement dit, les paramètres de Qualité de Service sont classés selon un ordre de priorité) ; ainsi, la sélection favorisera le concentrateur qui optimise le paramètre de Qualité de Service le plus prioritaire, et, en cas de conflit, le paramètre suivant dans l'ordre de priorité sera utilisé pour départager les concentrateurs.

En outre, dans le présent mode de réalisation, l'obtention du RTT est réalisée à l'aide de messages de test, que l'on appellera « PROBE ». Ce message PROBE peut être par exemple un message ICMP (Internet Control Message Protocol), notamment une commande ICMP « Ping » (c'est-à-dire une requête ICMP « Echo » suivie d'une réponse « Echo Reply »), ou un message d'établissement d'une session TCP, ou encore l'échange d'une option TCP « TIMESTAMP ». D'autres mécanismes peuvent évidemment être mis en oeuvre pour mesurer la valeur du paramètre de Qualité de Service choisi.

Le terminal T envoie des messages PROBE vers chaque adresse {IP@1, IP@2, ..., IP@N} de ladite liste pour calculer le délai RTT($i,j$) associé au chemin *i*. De préférence, les messages PROBE sont envoyés via chacun des *M* chemins considérés ; autrement dit, chaque message PROBE respectif est envoyé avec, comme adresse source, une adresse respective parmi les *M* adresses allouées au terminal T (notamment si des adresses distinctes lui sont allouées par chaque réseau de raccordement). Si la même adresse est utilisée pour se connecter à plusieurs réseaux d'accès, le terminal doit émettre autant de messages PROBE qu'il y a de réseaux d'accès actifs ; le terminal doit forcer ensuite l'acheminement des messages PROBE via chacune des interfaces disponibles.

On notera cependant qu'un concentrateur pourra ne pas être joignable via un chemin donné ; en effet, il peut arriver que le terminal T soit incapable d'envoyer le message PROBE vers ce concentrateur via ce chemin, ou qu'il reçoive en réponse un message d'erreur ICMP.

On peut visualiser les résultats obtenus au moyen du tableau suivant.

|  | Concentrateur $P_1$ | Concentrateur $P_2$ | ··· | ··· | Concentrateur $P_N$ |
|---|---|---|---|---|---|
| Chemin 1 | RTT(1,1) | RTT(1,2) | ··· | ··· | RTT(1, $N$) |

(suite)

| | Concentrateur $P_1$ | Concentrateur $P_2$ | ⋯ | ⋯ | Concentrateur $P_N$ |
|---|---|---|---|---|---|
| Chemin 2 | RTT(2,1) | RTT(2,2) | ⋯ | ⋯ | RTT(2, N) |
| ... | | | | | |
| Chemin M | RTT(M,1) | RTT(M,2) | ⋯ | ⋯ | RTT(M, N) |

Si les mesures de RTT font apparaître une distorsion importante entre les différents chemins, on peut prévoir que le terminal T ait la capacité de renoncer à utiliser des chemins multiples pour établir une communication, ou la capacité de ne pas inclure certains chemins pour l'établissement d'une connexion à chemins multiples. Par exemple, dans un tel cas, le terminal T pourra basculer du mode « chemins multiples » vers le mode « connexion simple » pour l'ensemble de ses communications tant que les conditions réseau ne se seront pas améliorées. Le seuil signalant cette variation majeure peut être configuré par le fournisseur de service, ou être codé dans le programme d'ordinateur mettant en oeuvre le procédé.

Enfin, selon une troisième étape, on sélectionne au moins un concentrateur parmi les concentrateurs $P_j$ qui ont été joints comme décrit ci-dessus à partir du terminal T.

Pour ce faire, on détermine tout d'abord, pour au moins un chemin i, le concentrateur $P_{k(i)}$ pour lequel la valeur de Qualité de Service QoS($i,k(i)$) est optimale (i.e., en l'occurrence, pour lequel la valeur du RTT est minimale) par comparaison avec les valeurs de Qualité de Service QoS(i,j), où $j \neq k(i)$, des autres concentrateurs $P_j$.

Pour effectuer cette détermination, on peut prévoir une valeur de tolérance (qui pourra, par exemple, être configurée dans le terminal T). Ainsi, deux mesures RTT1 et RTT2 seront considérées comme équivalentes si, et seulement si :

$$|RTT1 - RTT2| < \delta t.$$

La valeur de tolérance $\delta t$ peut être par exemple fixée par un fournisseur de connectivité réseau, ou configurée sous forme de variable d'environnement, ou encore codée dans le programme d'ordinateur mettant en oeuvre l'invention.

Si le terminal T dispose d'une seule interface, et donc d'un seul chemin (autrement dit, $M = 1$), on choisit, parmi les concentrateurs qui ont été joints via ce chemin, celui qui minimise le RTT. Ce concentrateur pourra alors être utilisé par le terminal T pour établir des communications à chemins multiples, par exemple en servant de relais MPTCP au service du terminal T.

Si le terminal T dispose de plusieurs interfaces physiques ou logiques, et donc de plusieurs chemins (autrement dit, $M > 1$), diverses variantes peuvent être envisagées.

Selon une première variante, on sélectionne, pour au moins un chemin *i*, ledit concentrateur pour lequel le RTT est minimal par comparaison avec les valeurs de RTT des autres concentrateurs qui ont été joints à partir du terminal T via le chemin *i*.

Ainsi, selon cette première variante, on sélectionne un concentrateur pour chaque chemin de l'ensemble de *M* chemins indépendamment des autres chemins (ce qui n'interdit nullement, le cas échéant, de sélectionner le même concentrateur pour deux chemins différents).

Cette première variante est avantageuse sur le plan de la Qualité de Service. En revanche, elle pose problème en l'absence d'un mécanisme permettant de préserver l'adresse source des messages émis par le terminal T, c'est-à-dire d'un mécanisme permettant au terminal T de solliciter deux concentrateurs distincts sans que les messages relayés par ces deux concentrateurs soient émis avec des adresses IP source différentes.

Selon une deuxième variante, on sélectionne un concentrateur unique pour l'ensemble des M chemins, ce concentrateur étant celui pour lequel le RTT est minimal, par comparaison avec les valeurs de RTT des autres concentrateurs qui ont été joints à partir du terminal T, pour le plus grand nombre de chemins parmi les *M* chemins.

Ainsi, selon cette deuxième variante, on sélectionne un concentrateur unique pour l'ensemble des *M* chemins.

Cette deuxième variante présente l'avantage de préserver de manière simple l'adresse source des messages émis par le terminal T via n'importe lequel des *M* chemins. En revanche, elle peut s'avérer sous-optimale du point de vue de la Qualité de Service.

Pour mettre en oeuvre cette deuxième variante, on peut opérer comme suit, en utilisant le tableau ci-dessus. Dans chaque ligne (associée à un chemin donné), on inscrit un « 1 » dans la case correspondant au concentrateur associé au RTT minimal, et un « 0 » dans les autres cases. Ensuite, on fait le total de chaque colonne, et l'on sélectionne le concentrateur présentant le total de valeur maximum.

Si plusieurs concentrateurs présentent la même valeur maximum dudit total, alors on sélectionne un concentrateur parmi les concentrateurs concernés, en appliquant un critère de sélection secondaire. On peut par exemple sélectionner le concentrateur dont l'adresse IP est la plus « grande ».

On rappelle à cet égard qu'une adresse IPv4 (IPv4@1=a1.b1.c1.d1) est dite plus grande qu'une autre adresse IPv4 (IPv4@2=a2.b2.c2.d3) si et seulement si « a1b1c1d1 > a2b2c2d3 ». Par exemple, l'adresse « 11.22.33.44 » est dite plus grande que l'adresse « 1.2.3.4 ». Pour comparer une adresse IPv4 avec une adresse IPv6, on peut utiliser par exemple l'algorithme de la RFC 6724 (« *Default Address Selection for Internet Protocol Version 6 (IPv6)* »).

Il importe de noter que les moyens du dispositif communicant selon l'invention ne sont pas nécessairement compris *au sein* de ce dispositif communicant. Ainsi, un mode de réalisation de l'invention consiste à activer un, ou plusieurs robots émettant des messages PROBE au bénéfice du dispositif communicant (ou, d'ailleurs, d'une pluralité de dispositifs communicants). La fréquence des tests effectués par le, ou les robots peut être configurée par l'opérateur de service réseau. L'avantage de l'utilisation d'un robot est de s'affranchir des mises à jour logicielles éventuellement requises pour ce, ou ces dispositifs communicants.

Plusieurs instances de ce robot peuvent être activées dans différents points d'accès au réseau, et mettre en oeuvre des tests pour un, ou plusieurs réseaux d'accès. Ce faisant, l'opérateur de réseau peut avantageusement maintenir une cartographie de la correspondance entre le, ou les concentrateurs de connexions à configurer par zone d'accès. Une telle cartographie permet de maintenir une visibilité sur la qualité de connectivité pour joindre des concentrateurs de réseau gérés par des partenaires de l'opérateur (par exemple, dans un contexte de convergence Fixe/Mobile, ou d'itinérance). Une telle cartographie peut également être utilisée pour la mise en place de politiques d'ingénierie de trafic.

Ces robots peuvent aussi être utilisés lors d'opérations de diagnostic pour, éventuellement, résoudre des problèmes de connectivité signalés par des utilisateurs, ou agir de manière proactive face à une dégradation du service de connectivité.

Selon un mode de réalisation de l'invention, les résultats des tests effectués par le dispositif communicant sont notifiés à une entité localisée dans le réseau, que l'on appellera « CSS » (initiales des mots anglais « *Concentrator Selection Server* » signifiant « Serveur de Sélection de Concentrateurs »), au moyen d'un message de notification, que l'on appellera REPORT(). L'utilité de cette entité CSS est de pouvoir solliciter le, ou les concentrateurs de connexions sélectionnés pour optimiser les communications du dispositif communicant, sans pour autant que le dispositif communicant soit associé explicitement à la procédure d'invocation (voire, de sélection) des concentrateurs. Ce mode de réalisation permet en particulier d'impliquer un concentrateur réseau dans une connexion d'une manière transparente pour le dispositif communicant (ainsi que pour son correspondant).

L'entité CSS a pour fonction d'instruire le réseau sous-jacent afin de rediriger le trafic émis par un dispositif communicant, ou envoyé à un dispositif communicant, vers le, ou les concentrateurs qui optimisent la Qualité de Service pour ce dispositif communicant. A titre d'exemple, l'instruction de l'entité CSS au réseau sous-jacent pourra consister à injecter des routes spécifiques en utilisant les ressources d'un protocole de routage dynamique. Un autre exemple de déploiement est la mise en place d'un répartiteur qui interceptera le trafic en provenance, ou à destination de tous les dispositifs communicants ; l'entité CSS pourra alors communiquer au répartiteur des consignes spécifiques à chaque dispositif communicant afin de rediriger le trafic en provenance, ou à destination de chaque dispositif communicant vers le, ou les concentrateurs sélectionnés.

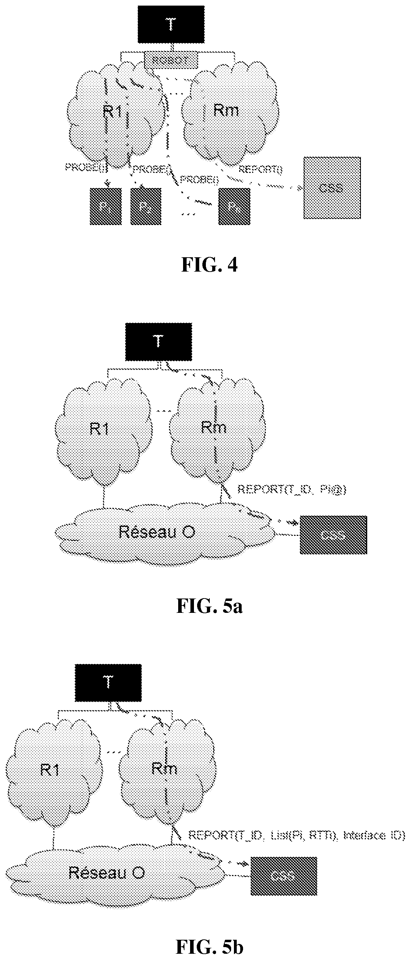

La **figure 4** illustre une mise en oeuvre de l'invention combinant l'utilisation d'un robot et d'une entité CSS.

Les **figures 5a et 5b** illustrent, à titre d'exemple, deux variantes de notification à l'entité CSS, par un terminal T, des résultats de tests de Qualité de Service selon l'invention.

Selon une première variante, illustrée par la figure 5a, le message de notification REPORT() contient au moins l'adresse du concentrateur de connexions sélectionné (Pi@), et l'identifiant T_ID du terminal T (par exemple, son adresse IP, son adresse MAC, ou son identifiant de ligne réseau). L'entité CSS ne se charge ici que de la redirection du trafic du terminal T vers le, ou les concentrateurs sélectionnés.

Selon une deuxième variante, illustrée par la figure 5b, le message de notification REPORT() contient, au moins, toutes les mesures effectuées par le terminal T ainsi que l'identifiant T_ID du terminal T. Dans cette deuxième variante, l'entité CSS est responsable de la sélection du, ou des concentrateurs, ainsi que de l'instruction au réseau sous-jacent pour que le trafic en provenance, ou à destination d'un terminal T soit intercepté par le, ou les concentrateurs sélectionnés. Cette variante permet à un opérateur de contrôler le service fourni à ses clients, et de limiter ainsi toute dégradation de service susceptible d'être provoquée, par exemple, par une mise en oeuvre malveillante. Cette variante permet aussi à l'opérateur d'optimiser l'utilisation des concentrateurs déployés, voire d'ajuster la localisation de ces concentrateurs dans le réseau pour une utilisation optimale des ressources. Par exemple, un opérateur peut décider d'activer une nouvelle instance de concentrateur de réseaux dans un point de présence si les remontées de mesures vers les concentrateurs déjà actifs font apparaître une distorsion importante entre ces mesures.

Le procédé selon l'invention peut être mis en oeuvre, par exemple, à fréquence régulière, et/ou à chaque changement de condition de raccordement réseau (par exemple, rattachement à un nouveau réseau, ou perte de raccordement à un réseau, ou expiration d'une adresse allouée à une interface, ou encore découverte d'un nouveau concentrateur). Cependant, le procédé n'est pas nécessairement réitéré lors de chaque nouvelle connexion. L'intervalle de réitération des tests peut être configuré par un utilisateur, ou fourni par un opérateur de service réseau (par exemple, via DHCP), ou encore codé dans le programme d'ordinateur mettant en oeuvre l'invention (valeur par défaut).

Lorsqu'un nouveau concentrateur a été sélectionné par un dispositif communicant, ce dernier peut décider de migrer immédiatement les connexions actives vers le nouveau concentrateur, ou de maintenir l'utilisation de tout ou partie des concentrateurs sur lesquels ces connexions actives reposent. On peut également prévoir que le dispositif communicant soit apte à renoncer à utiliser un chemin présentant une qualité médiocre pour joindre un concentrateur sélectionné.

Le dispositif communicant peut viser dans ses communications un concentrateur sélectionné en utilisant un mécanisme d'encapsulation de paquets ou toute autre forme de mécanisme d'acheminement du trafic vers l'adresse d'un correspondant. On va décrire à présent, à titre d'exemple, un mécanisme de communication permettant, avantageusement, d'éviter l'encapsulation de paquets ; en effet, l'encapsulation tend à pénaliser la qualité de la transmission, par exemple du fait de son impact sur la taille maximale des paquets transmis, au risque de provoquer des problèmes de ré-ordonnancement.

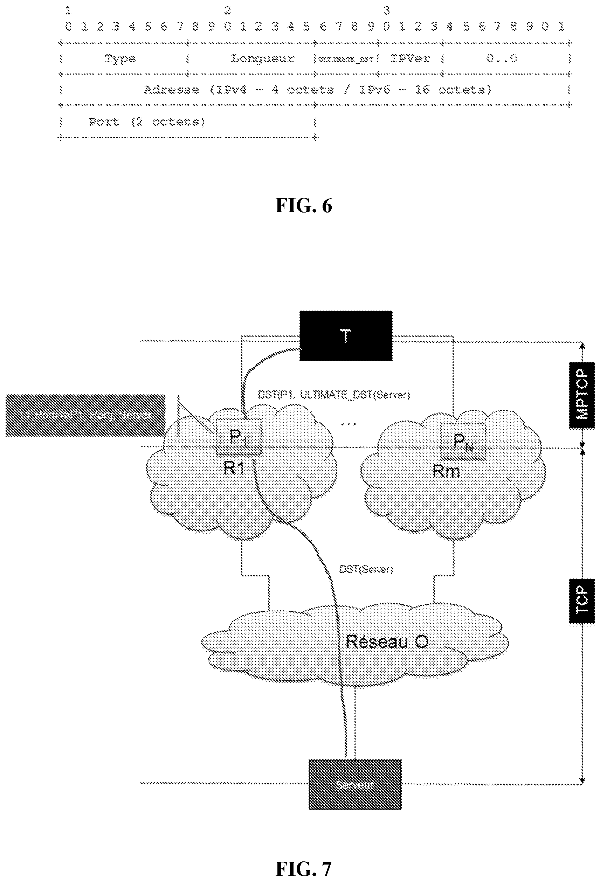

Dans cet exemple, on utilise une option TCP indiquant l'adresse du serveur distant : cette option TCP sera appelée ULTIMATE_DST, et est illustrée par la **figure 6.** Le concentrateur utilise l'adresse IP et le numéro de port indiqué dans cette option pour transmettre les paquets de données vers le serveur distant.

Un cas d'utilisation de cette option ULTIMATE_DST est illustré par la **figure 7.** Cette figure montre un terminal T disposant de chemins multiples. Le terminal T applique le procédé de sélection de concentrateur de connexions selon l'invention. Soit $P_1$ le concentrateur sélectionné. Quand le terminal T veut établir une connexion avec un serveur distant, il insère l'adresse de ce serveur dans une option ULTIMATE_DST. Suite à la réception de ce message, $P_1$ instancie une entrée pour mémoriser l'association entre l'adresse du terminal T et celle du serveur ; ensuite $P_1$ remplace l'adresse de destination par celle du serveur.

L'invention peut être mise en oeuvre au sein de noeuds de réseaux de communication, par exemple des terminaux d'abonné, des routeurs, des passerelles, ou des serveurs de sélection de concentrateurs, au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre de l'un quelconque des procédés de sélection selon l'invention.

En effet, l'invention vise aussi un programme d'ordinateur tel que décrit succinctement ci-dessus. Ce programme d'ordinateur peut être stocké sur un support lisible par ordinateur et peut être exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations inamovible, ou partiellement ou totalement amovible, comportant des instructions d'un programme d'ordinateur tel que décrit succinctement ci-dessus.

Ce support d'informations peut être n'importe quelle entité ou dispositif capable de stocker le programme. Par exemple, le support d'informations peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau tel que l'Internet.

En variante, le support d'informations peut être un circuit intégré dans lequel le programme est incorporé, le circuit étant adapté pour exécuter ou pour être utilisé dans l'exécution de l'un quelconque des procédés de sélection selon l'invention.

**Revendications**

**1.** Procédé de sélection de concentrateurs de connexions réseau pour un ensemble donné de $M \geq 1$ chemins de communication utilisables par un dispositif communicant, chaque interface respective dudit dispositif communicant étant connectée à un chemin respectif, ledit procédé comprenant une étape :

a) d'identification d'un ensemble $(P_1,P_2,...,P_N)$ de $N \geq 2$ concentrateurs situés dans au moins un réseau auquel le dispositif communicant est connecté, chaque concentrateur permettant d'agréger des connexions exploitant une pluralité de chemins susceptibles d'être utilisés par le dispositif communicant,

ledit procédé de sélection étant **caractérisé en ce qu'**il comprend en outre les étapes suivantes :

b) obtention de la valeur d'au moins un paramètre de Qualité de Service QoS$(i,j)$, pour au moins un chemin $i$, où $i$ = 1, ..., $M$, et pour des concentrateurs $P_j$ joignables à partir du dispositif communicant via ledit chemin $i$, et
c) sélection d'au moins un concentrateur dudit ensemble sur la base desdites valeurs de Qualité de Service obtenues.

2. Procédé de sélection selon la revendication 1, **caractérisé en ce que**, lors de ladite étape c), on sélectionne le concentrateur $P_{k(i)}$ pour lequel la valeur de Qualité de Service QoS$(i,k(i))$ est optimale par comparaison avec les valeurs de Qualité de Service QoS$(i,j)$, où $j \neq k(i)$, des autres concentrateurs qui ont été joints à partir du dispositif communicant via le chemin i.

3. Procédé de sélection selon la revendication 1, **caractérisé en ce que**, lors de ladite étape c), on sélectionne un concentrateur $P_k$ unique pour l'ensemble desdits $M$ chemins, ce concentrateur $P_k$ étant celui pour lequel la valeur de Qualité de Service QoS$(i,k)$ est optimale, par comparaison avec les valeurs de Qualité de Service QoS$(i,j)$, où $j \neq k$, des autres concentrateurs qui ont été joints à partir du dispositif communicant, pour le plus grand nombre de chemins parmi les $M$ chemins.

4. Procédé de sélection selon l'une quelconque des revendications 1 à 3, **caractérisé en ce que**, lors de ladite étape b), l'on obtient lesdites valeurs de Qualité de Service au moyen de messages de test transitant sur lesdits chemins.

5. Procédé de sélection selon l'une quelconque des revendications 1 à 4, **caractérisé en ce que** ladite connexion à chemins multiples met en oeuvre le protocole MPTCP *Multi-Path TCP.*

6. Dispositif communicant, ayant des moyens pour :

- identifier un ensemble $(P_1,P_2,...,P_N)$ de $N \geq 2$ concentrateurs de connexions réseau situés dans au moins un réseau auquel ledit dispositif communicant est connecté, chaque concentrateur permettant d'agréger des connexions exploitant une pluralité de chemins susceptibles d'être utilisés par le dispositif communicant,

ledit dispositif communicant étant **caractérisé en ce qu'**il a en outre des moyens pour :

- obtenir la valeur d'au moins un paramètre de Qualité de Service QoS$(i,j)$, pour au moins un chemin $i$, où $i$ = 1,...,$M$, parmi un ensemble donné de $M \geq 1$ chemins de communication utilisables par ledit dispositif communicant, et pour des concentrateurs $P_j$ joignables à partir du dispositif communicant via ledit chemin $i$, chaque interface respective du dispositif communicant étant connectée à un chemin respectif, et
- sélectionner au moins un concentrateur dudit ensemble sur la base desdites valeurs de Qualité de Service obtenues.

7. Dispositif communicant selon la revendication 6, **caractérisé en ce qu'**il comprend un dispositif-client (T).

8. Dispositif communicant selon la revendication 6, **caractérisé en ce qu'**il comprend un dispositif-relais (R) apte à mettre en oeuvre une connexion à chemins multiples et connecté à un dispositif-client (T) apte ou non à mettre en oeuvre une connexion à chemins multiples.

9. Serveur (CSS) de sélection de concentrateurs de connexions réseau, ayant des moyens pour assister, pour au moins ledit chemin $i$, la redirection du trafic émis par, ou envoyé à, un dispositif communicant selon l'une quelconque des revendications 6 à 8, vers ledit concentrateur sélectionné.

10. Système de sélection de concentrateurs de connexions réseau, comprenant :

- un dispositif communicant, ayant des moyens pour identifier un ensemble $(P_1,P_2, ...,P_N)$ de $N \geq 2$ concentrateurs de connexions réseau situés dans au moins un réseau auquel ledit dispositif communicant est connecté, chaque concentrateur permettant d'agréger des connexions exploitant une pluralité de chemins susceptibles d'être utilisés par le dispositif communicant,

ledit dispositif communicant étant **caractérisé en ce qu'**il a en outre des moyens pour obtenir la valeur d'au moins un paramètre de Qualité de Service QoS(i,j), pour au moins un chemin i, où i = 1,..., M, parmi un ensemble donné de M $\geq$ 1 chemins de communication utilisables par ledit dispositif communicant, et pour des concentrateurs $P_j$ joignables à partir du dispositif communicant via ledit chemin i, chaque interface respective du dispositif communicant étant connectée à un chemin respectif, et

- un serveur (CSS) de sélection de concentrateurs de connexions réseau, ayant des moyens pour

• sélectionner au moins un concentrateur dudit ensemble sur la base desdites valeurs de Qualité de Service obtenues, et
• assister, pour au moins le chemin i, la redirection du trafic émis par le, ou envoyé au, dispositif communicant, vers ledit concentrateur sélectionné.

11. Moyen de stockage de données inamovible, ou partiellement ou totalement amovible, comportant des instructions de code de programme informatique pour l'exécution des étapes d'un procédé de sélection selon l'une quelconque des revendications 1 à 5.

12. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé de sélection selon l'une quelconque des revendications 1 à 5, lorsqu'il est exécuté sur un ordinateur.

## Patentansprüche

1. Verfahren zur Auswahl von Netzwerkverbindungsknoten für eine gegebene Gesamtheit von M $\geq$ 1 von einer kommunizierenden Vorrichtung verwendbaren Kommunikationswegen, wobei jede jeweilige Schnittstelle der kommunizierenden Vorrichtung mit einem jeweiligen Weg verbunden ist, wobei das Verfahren den Schritt umfasst:

a) Identifikation einer Gesamtheit ($P_1$, $P_2$, ... $P_N$) von N $\geq$ 2 Knoten, die sich in mindestens einem Netzwerk befinden, mit dem die kommunizierende Vorrichtung verbunden ist, wobei es jeder Knoten ermöglicht, Verbindungen zu zusammenzufassen, die eine Vielzahl von Wegen nutzen, die geeignet sind, von der kommunizierenden Vorrichtung verwendet zu werden,

wobei das Auswahlverfahren **dadurch gekennzeichnet ist, dass** es auch die folgenden Schritte umfasst:

b) den Erhalt des Werts mindestens eines Dienstgüteparameters QoS(i,j) für mindestens einen Weg i, wobei i = 1, ..., M, und für Knoten $P_j$, die von der kommunizierenden Vorrichtung über den Weg i erreichbar sind, und
c) die Auswahl mindestens eines Knotens der Gesamtheit auf Basis der erhaltenen Dienstgüteparameter.

2. Auswahlverfahren nach Anspruch 1, **dadurch gekennzeichnet, dass** in Schritt c) der Knoten $P_{k(i)}$ ausgewählt wird, für den der Dienstgütewert QoS(i,k(i)) optimal ist im Vergleich mit den Dienstgütewerten (QoS(i,j), wobei j # k(i), der anderen Knoten, die von der kommunizierenden Vorrichtung über den Weg i erreicht wurden.

3. Auswahlverfahren nach Anspruch 1, **dadurch gekennzeichnet, dass** in Schritt c) ein einziger Knoten $P_k$ für die Gesamtheit der M Wege ausgewählt wird, wobei dieser Knoten $P_k$ jener ist, für den der Dienstgütewert QoS(i,k) im Vergleich mit den Dienstgütewerten QoS(i,j), wobei j # k, der anderen Knoten, die von der kommunizierenden Vorrichtung erreicht wurden, für den Großteil von Wegen unter den M Wegen optimal ist.

4. Auswahlverfahren nach einem der Ansprüche 1 bis 3, **dadurch gekennzeichnet, dass** in Schritt b) die Dienstgütewerte mit Hilfe von Testnachrichten, die auf den Wegen übertragen werden, erhalten werden.

5. Auswahlverfahren nach einem der Ansprüche 1 bis 4, **dadurch gekennzeichnet, dass** die Verbindung mit mehreren Wegen das Protokoll MPTCP, Multi-Path TCP, einsetzt.

6. Kommunizierende Vorrichtung, die Mittel besitzt, um:

- eine Gesamtheit ($P_1$, $P_2$, ... $P_N$) von N $\geq$ 2 Knoten zu identifizieren, die sich in mindestens einem Netzwerk befinden, mit dem die kommunizierende Vorrichtung verbunden ist, wobei es jeder Knoten ermöglicht, Verbindungen zu zusammenzufassen, die eine Vielzahl von Wegen nutzen, die geeignet sind, von der kommunizierenden Vorrichtung verwendet zu werden,

wobei die kommunizierende Vorrichtung **dadurch gekennzeichnet ist, dass** die auch Mittel besitzt, um:

- die Werte mindestens eines Dienstgüteparameters QoS(i,j) für mindestens einen Weg i, wobei i = 1, ..., M, unter einer gegebenen Gesamtheit von M $\geq$ 1 von der kommunizierenden Vorrichtung verwendbaren Kommunikationswegen und für Knoten $P_j$, die von der kommunizierenden Vorrichtung über den Weg i erreichbar sind, zu erhalten, wobei jede jeweilige Schnittstelle der kommunizierenden Vorrichtung mit einem jeweiligen Weg verbunden ist, und
- mindestens ein Knoten der Gesamtheit auf Basis der erhaltenen Dienstgüteparameter auszuwählen.

**7.** Kommunizierende Vorrichtung nach Anspruch 6, **dadurch gekennzeichnet, dass** sie eine Kundenvorrichtung (T) umfasst.

**8.** Kommunizierende Vorrichtung nach Anspruch 6, **dadurch gekennzeichnet, dass** sie eine Relaisvorrichtung (R) umfasst, die geeignet ist, eine Verbindung an mehrere Wege einzusetzen, und die mit einer Kundenvorrichtung (T) verbunden ist, die geeignet ist oder nicht, eine Verbindung an mehrere Wege einzusetzen.

**9.** Server (CSS) zur Auswahl von Netzwerkverbindungsknoten, der Mittel besitzt, um für mindestens den Weg i die Weiterleitung des von einer kommunizierenden Vorrichtung nach einem der Ansprüche 6 bis 8 entsandten oder an diese gesandten Verkehrs zu dem ausgewählten Knoten zu unterstützen.

**10.** System zur Auswahl von Netzwerkverbindungsknoten, umfassend:

- eine kommunizierende Vorrichtung, die Mittel besitzt, um

• eine Gesamtheit ($P_1$, $P_2$, ... $P_N$) von N $\geq$ 2 Knoten zu identifizieren, die sich in mindestens einem Netzwerk befinden, mit dem die kommunizierende Vorrichtung verbunden ist, wobei es jeder Knoten ermöglicht, Verbindungen zu zusammenzufassen, die eine Vielzahl von Wegen nutzen, die geeignet sind, von der kommunizierenden Vorrichtung verwendet zu werden,

wobei diese kommunizierende Vorrichtung **dadurch gekennzeichnet ist, dass** die auch Mittel besitzt, um:

• die Werte mindestens eines Dienstgüteparameters QoS(i,j) für mindestens einen Weg i, wobei i = 1, ..., M, unter einer gegebenen Gesamtheit von M $\geq$ 1 von der kommunizierenden Vorrichtung verwendbaren Kommunikationswegen und für Knoten $P_j$, die von der kommunizierenden Vorrichtung über den Weg i erreichbar sind, zu erhalten, wobei jede jeweilige Schnittstelle der kommunizierenden Vorrichtung mit einem jeweiligen Weg verbunden ist, und

- einen Server (CSS) zur Auswahl von Netzwerkverbindungsknoten, die Mittel besitzen, um

• mindestens einen Knoten der Gesamtheit auf Basis der erhaltenen Dienstgüteparameter auszuwählen, und
• für mindestens den Weg i die Weiterleitung des von der kommunizierenden Vorrichtung entsandten oder an diese gesandten Verkehrs zu dem ausgewählten Knoten zu unterstützen.

**11.** Nicht abnehmbares oder teilweise oder zur Gänze abnehmbares Datenspeichermittel, umfassend Informatikprogrammcodeanweisungen für die Ausführung der Schritte des Auswahlverfahrens nach einem der Ansprüche 1 bis 5.

**12.** Von einem Kommunikationsnetzwerk herunterladbares und/oder auf einem von einem Computer lesbaren Träger gespeichertes und/oder von einem Mikroprozessor ausführbares Computerprogramm, **dadurch gekennzeichnet, dass** es Anweisungen für die Ausführung der Schritte eines Auswahlverfahrens nach einem der Ansprüche 1 bis 5 umfasst, wenn es auf einem Computer ausgeführt wird.

**Claims**

1. Method for selecting network connection hubs for a given set of M ≥ 1 communication paths for use by a communication device, each respective interface of said communicating device being connected to a respective path, said method comprising a step of:

   a) identifying a set $(P_1, P_2, ..., P_N)$ of N ≥ 2 hubs located in at least one network to which the communicating device is connected, each hub allowing the aggregation of connections using a plurality of paths that can be used by the communicating device, said selection method being **characterized in that** it further comprises the following steps:
   b) obtaining the value of at least one Quality of Service parameter QoS(i,j), for at least one path i, where i = 1, ..., M, and for hubs $P_j$ that can be reached from the communicating device via said path i, and
   c) selecting at least one hub of said set on the basis of said Quality of Service values obtained.

2. Selection method according to Claim 1, **characterized in that**, in said step c), the hub $P_{k(i)}$ that is selected is the hub for which the Quality of Service value QoS(i,k(i)) is optimal by comparison with the Quality of Service values QoS(i,j), where j ≠ k(i), of the other hubs that have been reached from the communicating device via the path i.

3. Selection method according to Claim 1, **characterized in that**, in said step c), a single hub $P_k$ is selected for the set of said M paths, this hub $P_k$ being the one for which the Quality of Service value QoS(i,k) is optimal by comparison with the Quality of Service values QoS(i,j), where j ≠ k, of the other hubs that have been reached from the communicating device, for the largest number of paths among the M paths.

4. Selection method according to any of Claims 1 to 3, **characterized in that**, in said step b), said Quality of Service values are obtained by means of test messages travelling on said paths.

5. Selection method according to any of Claims 1 to 4, **characterized in that** said multiple path connection uses the MPTCP (Multi-Path TCP) protocol.

6. Communicating device, having means for:

   - identifying a set $(P_1, P_2, ..., P_N)$ of N ≥ 2 hubs located in at least one network to which said communicating device is connected, each hub allowing the aggregation of connections using a plurality of paths that can be used by the communicating device, said communicating device being **characterized in that** it further has means for:
   - obtaining the value of at least one Quality of Service parameter QoS(i,j), for at least one path i, where i = 1, ..., M, among a given set of M ≥ 1 communication paths usable by said communicating device, and for hubs $P_j$ that can be reached from the communicating device via said path i, each respective interface of the communicating device being connected to a respective path, and
   - selecting at least one hub of said set on the basis of said Quality of Service values obtained.

7. Communicating device according to Claim 6, **characterized in that** it comprises a client device (T).

8. Communicating device according to Claim 6, **characterized in that** it comprises a relay device (R) capable of implementing a multiple-path connection and connected to a client device (T) that may or may not be capable of implementing a multiple-path connection.

9. Server (CSS) for selecting network connection hubs, having means for assisting, for at least said path i, the redirection of the traffic transmitted by, or sent to, a communicating device according to any of Claims 6 to 8 towards said selected hub.

10. System for selecting network connection hubs, comprising:

    - a communicating device, having means for:

       • identifying a set $(P_1, P_2, ..., P_N)$ of N ≥ 2 hubs located in at least one network to which said communicating device is connected, each hub allowing the aggregation of connections using a plurality of paths that can be used by the communicating device,

said communication device being **characterized in that** it further has means for:

• obtaining the value of at least one Quality of Service parameter QoS(i,j), for at least one path i, where i = 1, ..., M, among a given set of M ≥ 1 communication paths usable by said communicating device, and for hubs $P_j$ that can be reached from the communicating device via said path i, each respective interface of the communicating device being connected to a respective path, and

- a server (CSS) for selecting network connection hubs, having means for:

• selecting at least one hub of said set on the basis of said Quality of Service values obtained, and
• assisting, for at least said path i, the redirection of the traffic transmitted by, or sent to, the communicating device towards said selected hub.

11. Data storage means which is non-removable or partially or fully removable, comprising computer program code instructions for executing the steps of a selection method according to any of Claims 1 to 5.

12. Computer program which can be downloaded from a communication network and/or stored on a computer-readable medium and/or executed by a microprocessor, **characterized in that** it comprises instructions for executing the steps of a selection method according to any one of Claims 1 to 5 when it is executed on a computer.

**FIG. 1a**

**FIG. 1b**

**FIG. 1c**

**FIG. 2**

**FIG. 3**

**FIG. 4**

**FIG. 5a**

**FIG. 5b**

```
 1                      2                      3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|      Type       |     Longueur    |nnnnn_po| IPVer |    0..0      |
+-+-+-+-+-+-+-+-+-+-+-+-+-+-+-+-+-+-+-+-+-+-+-+-+-+-+-+-+-+-+-+-+
|          Adresse (IPv4 - 4 octets / IPv6 - 16 octets)         |
+-+-+-+-+-+-+-+-+-+-+-+-+-+-+-+-+-+-+-+-+-+-+-+-+-+-+-+-+-+-+-+-+
|     Port (2 octets)              |
+-+-+-+-+-+-+-+-+-+-+-+-+-+-+-+-+-+-+
```

**FIG. 6**

**FIG. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2903226 A

- WO 2012142437 A

**Littérature non-brevet citée dans la description**

- **A. FORD ; C. RAICIU ; M. HANDLEY.** *TCP Extensions for Multipath Operation with Multiple Addresses,* Janvier 2013